# EUROPEAN PATENT APPLICATION

(11) **EP 4 495 565 A1**
(43) Date of publication of application: **22.01.2025**
(21) Application number: 24189672.9
(22) Date of filing: 19.07.2024
(51) Int. Cl.: G01L 5/24, F16B 31/02

(54) **SENSORIZED MECHANICAL COUPLING DEVICE**

(30) Priority: 21.07.2023 IT 202300015348
(71) Applicant: Bonfiglioli S.p.A., 40012 Calderara di Reno (BO) (IT)
(72) Inventor: COMINETTI, Paolo, 40012 CALDERARA DI RENO (BO) (IT); TORCELLI, Andrea, 40012 CALDERARA DI RENO (BO) (IT)
(74) Representative: Studio Torta S.p.A.

(57) **Abstract**

A mechanical coupling device (2) is described, provided with a microelectromechanical sensor (1), which includes in an integrated manner: a detection structure (10), of a MEMS type, made in a die (11) of semiconductor material, externally coupled to a surface portion of the mechanical coupling device (2) to detect deformations thereof and generate a corresponding detection signal (Sᵣ); and an electronic circuit (12), operatively coupled to the detection structure (10) and configured to receive and process the detection signal (Sᵣ) to generate an output signal (Sₒᵤₜ). The output signal (Sₒᵤₜ) is correlated to physical quantities associated with deformations and indicative of operating conditions of the mechanical coupling device (2).

## Description

### CROSS-REFERENCE TO RELATED APPLICATIONS

This patent application claims priority from Italian patent application no. 102023000015348 filed on July 21, 2023, the entire disclosure of which is incorporated herein by reference.

### TECHNICAL FIELD

The present solution relates to a mechanical coupling device, in particular of the screw or bolt type, sensorized by means of a microelectromechanical sensor, of a MEMS (Micro Electro Mechanical Sensor) type, having a high resolution for measuring surface micro-deformations.

### BACKGROUND

The need is known, in some applications, to have an indication of the quality of the mechanical coupling obtained by means of suitable mechanical coupling devices between different parts, by utilizing screws or bolts.

To such end, it is known for example to apply strain gauges in the stem of a screw, or on the faces of the head of the screw or of the locking nut, in order to monitor the load strength thereof, namely the preload or the load force to which the screw is subjected following its tightening.

For example, cylindrical strain gauges with axial extension can be utilized, inserted in a hole, made on the upper part of the screw, for example having a hexagonal head, and partly continuing in the stem of the same screw.

Although such strain gauges allow measuring and monitoring the load strength of the screw, their application involves an invasive intervention on the screw (which can alter also in a significant manner the structural characteristics of the same screw) and it is possible only for screws and nuts having sufficiently large dimensions, which can house the aforementioned strain gauges; furthermore, the cost of such solutions is generally high.

Additionally, a long time is required for the calibration of the strain gauges and the solution is to be adapted as a function of the load to be measured.

A solution of this type is described for example in CN 109 738 106 A.

Such document discloses an intelligent bolt which comprises a screw having a main body wherein a central hole is made inside which a pull rod is inserted. An elastomer, to which strain gauges are coupled, is mounted on the head of the screw, so as to be in contact with an end of the pull rod. The preload of the bolt and the flexure state of the screw can be detected with precision thanks to the deformation of the pull rod and the corresponding deformation of the elastomer detectable by the strain gauges.

It is evident that the solution described in such document requires an invasive intervention (drilling) on the screw and, consequently, problems and limitations similar to the ones previously described.

DE 10 2020 116618 A1 discloses a further known solution, which envisages the use of one or preferably more deformation detection sensors (strain gauges) applied on the side surfaces (or faces) of a nut for detecting a deformation and a preload force of the same nut.

Such solution further provides for an electronic circuit integrated in a ring-shaped board (PCB) installed in a through opening made in the nut; such electronic circuit defines a radiofrequency unit (RFID) coupled, by means of electrical connection tracks, to the deformation sensors and which can be coupled in communication to an external RFID reader.

As it is evident, also such solution requires a dedicated machining of the nut, which furthermore must have sufficient dimensions for housing the electronic circuit (the aforementioned document suggests the application for nuts with measures greater than 'M10'). The same is valid for the mounting of the deformation detection sensors on the faces of the nut, which also require a given available surface.

Furthermore, such solution in any case requires dedicated tools suitably modified for not damaging the deformation sensor(s) in the tightening step.

Another known solution provides for utilizing washers sensorized by means of piezoelectric sensors, having a housing with suitable dimensions for accommodating the screw to be monitored.

Also such solution, besides being expensive, has the disadvantage of modifying the geometry of the coupling; furthermore, the washers have to be selected with admissible diameter and load based on the dimensions and characteristics of the screw or bolt.

A further method for knowing in an indirect manner the load strength of the screw is to utilize a tightening wrench with dynamometer, for measuring the tightening torque. Such measurement is anyway imprecise as the relation between the tightening torque and the screw load strength is influenced by the frictions between screw head and resting base and between screw threads and nut screws which are highly variable as a function of the surface coatings, the finishing and the presence of greases or lubricants.

Therefore, the need is certainly felt to provide solutions for detecting and monitoring characteristic quantities associated with mechanical coupling elements, which have a reduced cost and are very easy to instal, furthermore not obliging to select dedicated components.

### SUMMARY

The aim of the present solution is in general to provide an answer to the aforementioned need.

According to the present solution, a device is thus provided, as described in the appended claims.

### BRIEF DESCRIPTION OF THE DRAWINGS

In order to better understand the present solution, preferred embodiments thereof are now described, by way of mere non-limiting example and with reference to the accompanying drawings, wherein:
- Figure 1 schematically shows a mechanical coupling device, in particular a screw, sensorized by means of a microelectromechanical sensor, according to an aspect of the present solution;
- Figure 2 is a plot, which illustrates the trend of an output signal from the microelectromechanical sensor, in relation to tightening operations of the screw;
- Figure 3 is a schematic block diagram of the microelectromechanical sensor of Figure 1, in a possible embodiment;
- Figure 4A is a bottom schematic perspective view of the microelectromechanical sensor, according to an embodiment of the present solution;
- Figure 4B is a top schematic perspective view of the microelectromechanical sensor;
- Figure 5 shows a possible layout of a deformation detection structure of the microelectromechanical sensor, according to an embodiment of the present solution;
- Figure 6 is a schematic block diagram of the microelectromechanical sensor, according to a further aspect of the present solution; and
- Figures 7A and 7B show plots of characteristic quantities associated with the mechanical coupling device, which can be measured in a combined manner by means of the microelectromechanical sensor of Figure 1, in comparison with laboratory measurement systems.

### DESCRIPTION OF EMBODIMENTS

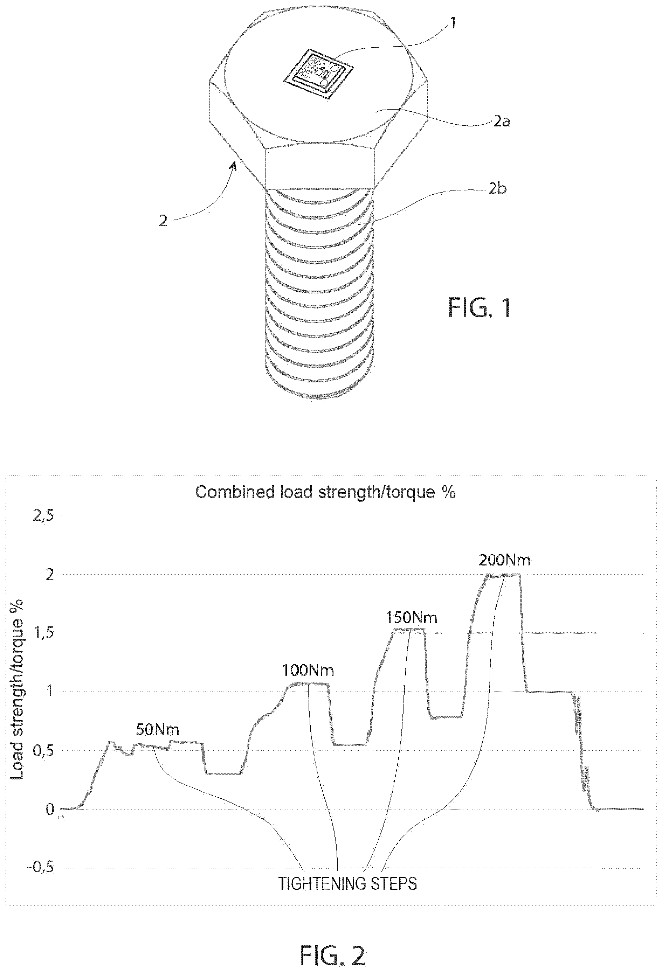

As is schematically illustrated in Figure 1, an aspect of the present solution provides for sensorizing a mechanical coupling device, in the example a screw 2, in particular a screw having a hexagonal flat head, by means of the application of a microelectromechanical sensor 1.

It is anyway highlighted that the present solution can be applied to any type of mechanical coupling device, for example to any type of screw, which can be in such manner sensorized, in particular without limitations of dimensions or shape.

In a possible implementation, the microelectromechanical sensor 1 is externally coupled to the screw 2 (completely outside a corresponding external surface portion), at a head portion 2a thereof, in particular being coupled on a front face of such head portion 2a opposite a rear face coupled to a stem portion 2b of the same screw 2.

In the illustrated example, the microelectromechanical sensor 1 is bonded to the aforementioned front face of the head portion 2a of the screw 2.

Advantageously, such coupling of the microelectromechanical sensor 1 to the screw 2 does not involve any invasive impact or structural modification to the same screw 2 and furthermore does not oblige to utilize or purchase dedicated components or tools.

In particular, the microelectromechanical sensor 1 is a MEMS deformation sensor having a high sensibility (also by various orders of magnitude higher than traditional solutions for measuring deformations, for example than the above-mentioned strain gauges) and is configured to detect deformations at the head portion 2a of the screw 2 and provide an electrical detection signal as a function of such deformations, which can be correlated to one or more physical quantities which generated such deformations and are associated with the operation and in particular with the operating conditions of the screw 2.

According to an aspect of the present solution, by correlating the surface deformation to the physical quantity that generated it, the microelectromechanical sensor 1 is capable of providing a detection and a monitoring of physical quantities related to the operating performances of the screw 2. In particular, such physical quantities comprise a tightening torque and a load strength, or load force, of the screw 2.

It is thus highlighted that the aforementioned MEMS deformation sensor thus provides an indication of the actual operating conditions of the screw 2 to which it is coupled (in terms of physical quantities associated with its operation).

In particular, considering the strain deformation ε in a dimensionless manner, such as ΔL/L (where ΔL is the variation of a dimensional parameter, for example length L, following the deformation), the microelectromechanical sensor 1 according to the present solution is capable of detecting deformations in the range 10⁻⁵ - 10⁻¹⁰ (namely nanodeformations, n-ε), unlike traditional strain gauges which are not capable of going beyond 10⁻⁶; this means that with the microelectromechanical sensor 1 it is possible to obtain a sensibility even 10000 times greater in detecting the small deformations.

Advantageously, as it will be discussed in the following, the microelectromechanical sensor 1 is configured to allow obtaining, as a function of the processing of the deformations detected at the head portion 2a of the screw 2, an electrical output signal, indicated in the following by Sₒᵤₜ, which can be correlated, after a suitable preliminary correlation operation, to any of the aforementioned physical quantities (for example, tightening torque and load strength).

The more suitable positioning of the microelectromechanical sensor 1 on the head portion 2a of the screw 2 can be determined for example by means of preliminary finite element analyses (FEM - Finite Element Method) aimed at identifying a better position in terms of ratio between detected signal and maximum range of the sensor (furthermore a position in which the material of the aforementioned screw 2 has a certainly elastic behaviour).

The same analyses can further allow correlating the detected deformation to the value of the quantity to be detected (for example the tightening torque or the load strength).

Alternatively, such correlation can be implemented by means of the aid of on-bench deformation measurements, by utilizing suitable measurement instruments (for example of the tightening torque in relation to the screw load strength).

The screw 2 provided of the microelectromechanical sensor 1 consequently is sensorized or "intelligent", as it is capable of directly providing at the output, for example to an external monitoring system, information related to its operation and to its operating conditions, in terms of the corresponding significant physical quantities, such as the tightening torque and the load strength or load force.

Specifically, the microelectromechanical sensor 1 is capable of measuring with a high sensibility the surface deformations which are generated on the head portion 2a of the screw 2 following the application of a twisting torque in the tightening step; and furthermore, in a joint or combined manner, the deformations related to the load strength on the stem portion 2b of the same screw 2 once the application of the tightening torque is interrupted and only the load force remains, which is the objective of the threaded coupling.

Due to the fact that the microelectromechanical sensor 1 operates in the field of elastic deformation of the material of the screws (for example, with maximum deformation values up to 500 microstrain, for example around 250 microstrain) and since such elastic behaviour of the screws is guaranteed by design (for preventing permanent deformations of the threaded member, by design suitable safety coefficients are provided), the same microelectromechanical sensor 1 is suited for all the applications and on screws having different measures, load strength values and tightening torque values.

As indicated, the calibration of the microelectromechanical sensor 1 (correlation between read deformation and tightening torque/load strength applied to the screw 2) can be preliminarily performed by means of FEM analysis of the screw 2 subjected to the load, or with a real measurement of the tightening torque or of the load strength with a dedicated test bench.

With reference to what discussed in the foregoing, Figure 2 shows the trend of an output signal Sₒᵤₜ generated based on the detection signal provided by the microelectromechanical sensor 1, associated with the physical quantities indicative of the operation and of the operating conditions of the screw 2.

In particular, the value of such output signal Sₒᵤₜ is correlated both to the tightening torque, during steps of tightening the screw 2, and to the load strength of said screw 2, during following steps subsequent to the application of the aforementioned tightening torque.

In particular, by way of example, several subsequent tightening steps are illustrated, with application of a tightening torque on the head portion 2a of the screw 2, having gradually increasing values (in the example, 50, 100, 150 and 200 Nm).

The output signal Sₒᵤₜ, being a function of the deformation perceived on the head portion 2a of the screw 2, is proportional to the torque applied in the tightening step. In the steps following the application of the tightening torque, the aforementioned torque applied to the head portion 2a of the screw 2 is zeroed, so that the share of deformation due to the twisting torque disappears and the residual deformation signal is proportional only to the load strength on the stem portion 2b of the screw 2, which is discharged on the head portion 2a and is detected by the microelectromechanical sensor 1.

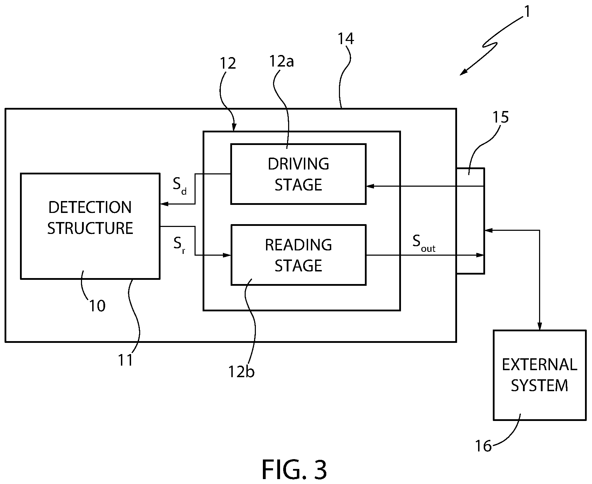

More specifically, and as is schematically shown in Figure 3, the microelectromechanical sensor 1 may comprise a detection structure 10, of a MEMS type, integrated in a die 11 of semiconductor material, in particular silicon, configured to be coupled to the aforementioned head portion 2a of the screw 2 for detecting the surface deformations.

In the illustrated embodiment, the microelectromechanical sensor 1 further comprises, in an integrated manner, an electronic circuit 12, operatively coupled to the detection structure 10 and implementing a driving stage 12a configured to provide driving signals S_{d} for the detection structure 10 and a reading stage 12b configured to receive and process detection signals Sᵣ provided by the detection structure 10 for generating the output signal Sₒᵤₜ associated with the desired physical quantity indicative of the operation and of the operating conditions of the screw 2.

Such electronic circuit 12 can be made with discrete components on a flexible printed circuit (PCB flex - Printed Circuit Board flex) or in an integrated manner by utilizing ASIC (ASIC - Application Specific Integrated Circuit) semiconductors.

In particular, the reading stage 12b is configured for: processing the detection signal Sᵣ provided by the detection structure 10 as a function of the detected deformations; and generating the output signal Sₒᵤₜ, which can directly provide a measurement correlated to the physical quantity of interest (indicative of the operation and of the operating conditions of the screw 2).

In a possible implementation, the reading stage 12b can internally comprise a memory for storing preliminary characterization information associated with the mechanical coupling device (screw 2), for implementing the aforementioned correlation between the output signal Sₒᵤₜ and the quantity to be measured.

It is underlined that the microelectromechanical sensor 1 can also comprise more than one detection structure 10 (of a MEMS type) for measuring microdeformations on more surface directions.

The microelectromechanical sensor 1 comprises a package 14 which encloses the detection structure 10 and, in the example, the electronic circuit 12, for example made of a thermoplastic co-moulded material. The aforementioned package 14 advantageously has small dimensions, for example of approximately 20x20 mm (but which can also reach 5x5 mm) and is designed to be coupled entirely externally to the screw, in particular to the aforementioned head portion 2a of the same screw 2.

In a possible embodiment, an electrical connector 15 can be externally associated with the package 14, configured to provide an electric interface of the microelectromechanical sensor 1 towards the external environment, for example towards an external electronic system 16 configured to receive the aforementioned output signal Sₒᵤₜ and to perform further processing operations as a function of the same output signal Sₒᵤₜ. The external electronic system 16 can further provide a power supply to the microelectromechanical sensor 1 through the aforementioned electrical connector 15.

For example, such electrical connector 15 can be an industrial connector with degree of protection IP68 (or similar) of a multipolar type (generally a 4-pin type).

Alternatively, the connection between the microelectromechanical sensor 1 and the external electronic system 16 can be implemented in a wireless manner, with wireless connection technologies, for example with Bluetooth protocol, preferably with reduced energy consumption (BT Low Energy). In such case, the detection structure 10 and the electronic circuit 12 can be powered by battery, or, advantageously in the absence of a battery, with an induction power supply system (by the external electronic system 16, which can approach the microelectromechanical sensor 1 during measurement).

A wireless connection solution can advantageously allow integrating in a watertight manner on the head portion 2a of the screw 2 the microelectromechanical sensor 1 (inclusive of the detection structure 10 and of the electronic circuit 12) .

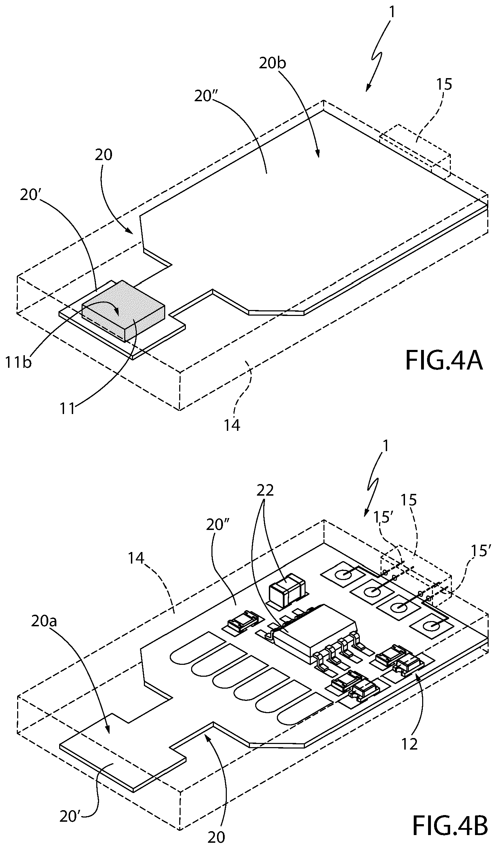

More specifically, and with reference to Figures 4A and 4B, in a possible embodiment the microelectromechanical sensor 1 comprises a substrate or support 20, which has a top face 20a and a bottom face 20b, the latter configured to be coupled, at least partly in contact, to the head portion 2a of the screw 2.

The die 11 of the detection structure 10 is coupled by means of a flip-chip coupling to the bottom face 20b of the support 20, at a first distal portion 20' thereof.

Substantially, a front face (indicated in the following by 11a) of the die 11, at which constitutive elements of the detection structure 10 and corresponding electrical connection pads are formed, is mechanically and electrically coupled (by means of bonding) to the aforementioned bottom face 20b of the support 20.

A rear face 11b (or base) of the aforementioned die 11, vertically opposite the aforementioned front face 11a, is instead designed to be coupled, for example by means of bonding or other fastening techniques (for example welding), to the head portion 2a of the screw 2. Such rear face 11b can conveniently be accessible from the outside of the package 14 of the microelectromechanical sensor 1, for example being arranged flush with an external surface of the same package 14.

Advantageously, at least part of the aforementioned support 20, in particular the aforementioned first distal portion 20' is made of a flexible material, for example Kapton, so as to facilitate the coupling to the aforementioned casing and furthermore so as to ease the detection of the deformations by the detection structure 10.

The electronic circuit 12 of the microelectromechanical sensor 1 is coupled to the upper face 20a of the support 20, at a second distal portion 20" thereof, longitudinally opposite the aforementioned first distal portion 20'; in particular, Figure 4B illustrates by way of mere example electronic components 22 of the aforementioned electronic circuit 12 (here made in a discrete embodiment), electrically welded to the aforementioned top face 20a of the support 20. The second distal portion 20" of the support 20 is in this case a printed circuit board portion (advantageously, made of flexible material, as well).

In a manner not illustrated, suitable conductive tracks and paths of electrical connection are made in the support 20, which thus acts as an electrical coupling interface between the detection structure 10 and the associated electronic circuit 12.

As is schematically illustrated in the same Figure 4B, pins 15' of the electrical connector 15 are coupled to pads carried by the top face 20a of the support 20, so as to allow, as previously discussed, the provision of the power supply to the microelectromechanical sensor 1 and furthermore the provision of the output signal Sₒᵤₜ to the outside of said microelectromechanical sensor 1.

In a possible implementation, the detection structure 10 of the microelectromechanical sensor 1 may define a flexural MEMS resonator, integrated in the aforementioned die 11 with a wafer level package.

For example, the detection structure 10 can be manufactured as specifically described in the document L. Belsito et al., "Fabrication of high-resolution strain sensors based on wafer-level vacuum packaged MEMS resonators", Sensors and Actuators A: Physical, Volume 239, 2016, pp. 90-101.

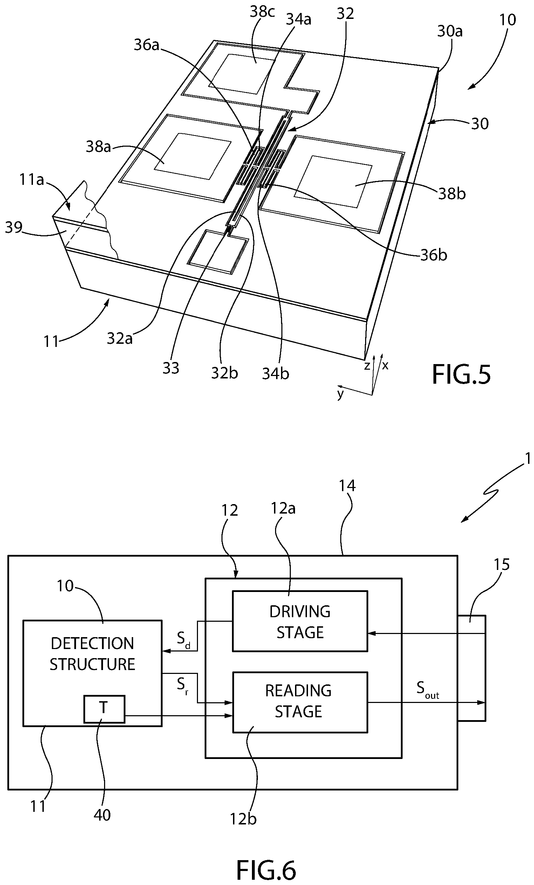

As is shown in Figure 5, the detection structure 10 is in such case made in a substrate 30 of the aforementioned die 11, for example a SOI, Silicon On Insulator, substrate and comprises a resonating element 32, of clamped-clamped type, defined by means of the machining of an active layer 30a of the same substrate 30.

The resonating element 32 comprises a first and a second arm 32a, 32b, constrained to each other at corresponding longitudinal ends separated along their longitudinal extension by a gap 33. Such first and second arms 32a, 32b have greater length along a first axis x of a horizontal plane xy, reduced width (along a second axis y of said horizontal plane xy) and reduced thickness (along a vertical axis z, orthogonal to the horizontal plane xy), so as to be yieldable to a flexure in the same horizontal plane xy.

The aforementioned first and second arms 32a, 32b are integrally coupled, at a corresponding central portion, to a first and, respectively, a second movable electrode 34a, 34b, which are arranged on the opposite side of the aforementioned gap 33 with respect to the second horizontal axis y.

The detection structure 10 further comprises a first and a second fixed electrodes 36a, 36b, arranged facing, at a given distance of separation, the first and the second movable electrodes 34a, 34b, respectively, so as to make a respective capacitive coupling.

A first and a second connection pads 38a, 38b are electrically coupled to the first and to the second fixed electrodes 36a, 36b, respectively, and furthermore a third connection pad 38c is electrically coupled to the aforementioned first and second movable electrodes 34a, 34b.

The detection structure 10 further comprises a cap 39 (schematically illustrated herein in a partial manner) which hermetically closes at the top the resonating element 32, creating a vacuum condition, so as to facilitate the actuation thereof in resonance condition (without dampening effects due to the presence of air). A top surface of such cap 39 further constitutes the aforementioned front face 11a of the die 11.

During operation, through the aforementioned connection pads 38a-38c the driving signals S_{d} provided by the driving stage 12a of the electronic circuit 10 cause the actuation at the resonance frequency of the resonating element 32, for example with a push-pull oscillation movement of the first and second arms 32a, 32b.

The deformations perceived by the detection structure 10 cause a modification of the aforementioned resonance frequency associated with the resonating element 32. An oscillation voltage of such resonating element 32 can constitute in such case the detection signal Sᵣ provided by the detection structure 10 to the reading stage 12b of the electronic circuit 12, indicative of the deformations and based on which the same electronic circuit 12 is capable of providing the output signal Sₒᵤₜ, correlated to the physical quantities associated with the operation and the operating conditions of the screw 2.

A further aspect of the present solution can provide for the possibility to compensate, internally the microelectromechanical sensor 1, a total deformation value measured by the same microelectromechanical sensor 1, eliminating a part, or share, which is not related to the quantity to be measured (for example, tightening torque or load strength of the screw 2), but which is due to a thermal deformation of the material following a temperature variation.

As is schematically shown in Figure 6, a temperature transducer (T) 40 can be in such case formed directly within the detection structure 10, inside the package 14, for example in the aforementioned die 11, so as to provide an indication of the temperature value during detection.

By way of example, the manufacturing of a dummy resonating element could be provided, specifically configured to be insensible to the deformations, but sensible to the temperature, so as to provide a compensation signal S_{c} with which the reading stage 12b can be capable of compensating the detection signal Sᵣ provided by the detection structure 10.

Based on what discussed above, the advantages that the present solution allows to achieve are evident.

Such advantages include, among others:
- very low dimensions and manufacturing costs (also ten times less than known solutions);
- no invasiveness in the mechanical coupling, which does not require structural modifications of the screw 2, as it is entirely made on the outside of the screw (without requiring internal interventions or modifications or in any case dedicated machining operations of the screw);
- universality of application of the microelectromechanical sensor 1 for measurement on screws 2 of any dimensions (both with respect to diameter and length) without limitations of tightening torque or load strength (always within the elastic behaviour limits of the screw 2);
- possibility to measure, with one single sensor, both the tightening torque applied to the head portion 2a of the screw 2 and the load strength on the stem portion 2b of the same screw 2 (a very useful characteristic for knowing how much of the applied torque generates the load strength on the screw and how much is unloaded by friction on the thread or on the "underhead" of the screw 2);
- possibility to perform the measurements of tightening torque and load strength of the screw 2, without being influenced by the frictions on the thread or on the "underhead" of the screw 2 or by the presence or absence of lubricating material in contact with the same screw 2.

The precision of the measurements carried out by means of the microelectromechanical sensor 1, suitably calibrated, was tested by the Applicant by means of experimental measurements.

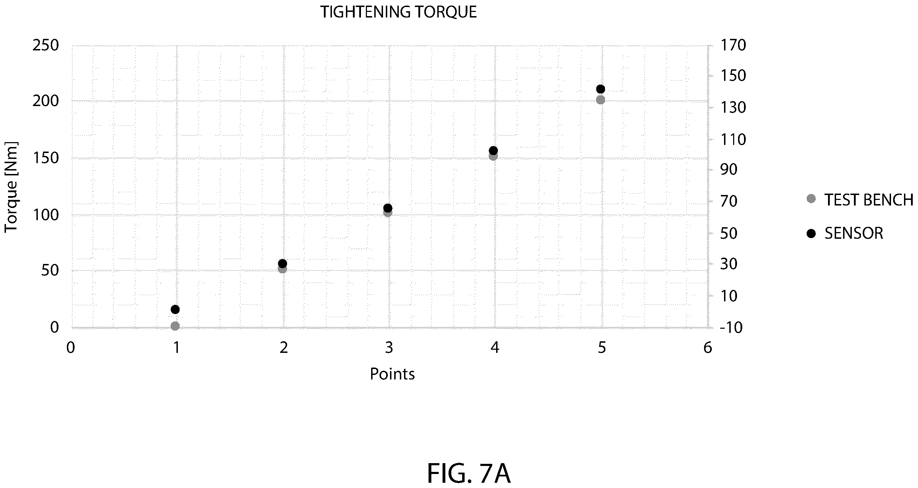

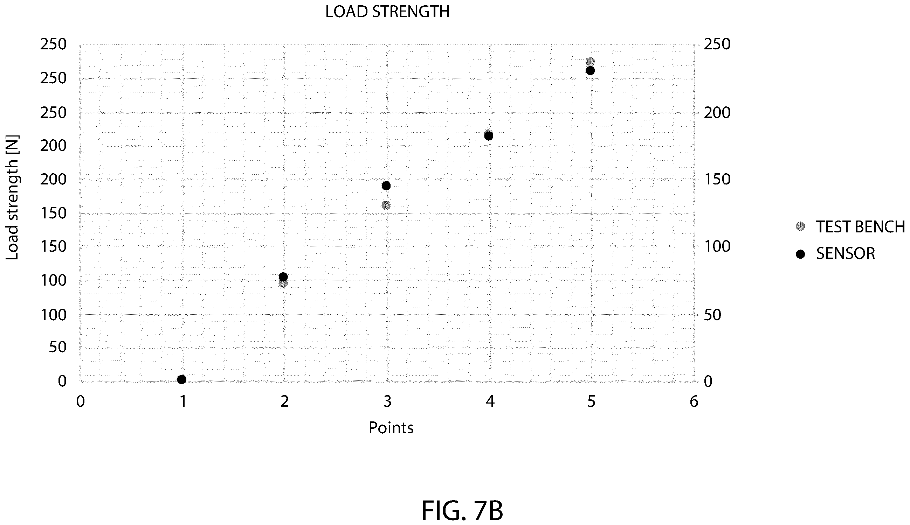

To this regard, Figures 7A and 7B show a comparison between tightening torque values (expressed in Nm) and load strength values (expressed in N), respectively, measured by the microelectromechanical sensor 1 (obtained based on the values of the aforementioned output signal Sₒᵤₜ) and corresponding values of the same quantities measured by means of an experimental test bench (during the tests, the sensorized screw 2 was placed in the test bench, so as to simultaneously carry out the comparison measurements).

The aforementioned Figures 7A and 7B highlight how the measurements of the microelectromechanical sensor 1 can substantially match the measurements obtained by means of the test bench.

Advantageously, the microelectromechanical sensor 1 is also suited for a continuous monitoring over time of the load strength of the screw 2, load strength which can change for example due to loosening of the threaded coupling or following the application of loads on the same coupling.

The microelectromechanical sensor 1 is thus also capable of carrying out a diagnostic of the threaded coupling and a prognostic (estimate of the residual life) also evaluating the fatigue cycles which over time are applied to the threaded connection.

The microelectromechanical sensor 1 can also provide an indication of the temperature of the screw 2, which could be useful for evaluating the thermal expansions on the coupling, which could cause loosening problems or breakages.

Finally, it is clear that modifications and variations can be made to what described and illustrated herein without thereby departing from the scope of the present solution, as defined in the appended claims.

For example, it is highlighted that in a possible implementation, the microelectromechanical sensor 1 could integrate on board, inside the electronic circuit 12, a processing stage, for example an artificial intelligence (AI) processing stage, with the aim to autonomously perform processing algorithms, for example machine learning algorithms, aimed at evaluating the performances and/or the operating conditions of the screw 2.

In particular, such processing algorithms could be aimed at predictive diagnostics and prognostics based on the time evolution of the deformation signal (and/or of the output signal Sₒᵤₜ) and thus of the aforementioned physical quantities (it should be noted that such additional processing operations of predictive diagnostics and prognostics with respect to the aforementioned deformation measurements can be available thanks to the high sensibility of the microelectromechanical sensor 1).

In an evident manner, the aforementioned algorithms and the aforementioned predictive diagnostic and prognostic analyses could, alternatively or additionally, be implemented externally the microelectromechanical sensor 1, by the aforementioned external electronic system 16.

The possible presence of conditioning and processing algorithms of the signals detected inside the microelectromechanical sensor 1 can advantageously provide a monitoring solution directly usable by a final user.

Furthermore, in a possible implementation, the microelectromechanical sensor 1 could integrate more than one detection structure 10, in particular more than one resonating element 32, for example in order to allow a measurement of several physical quantities and/or the compensation, for example in temperature, of the output signal Sₒᵤₜ.

Furthermore, in a possible further implementation, the electronic circuit 12, operatively coupled to the detection structure 10 could be made externally the microelectromechanical sensor 1, for example in the external electronic system 16, as it is suitably connected, in a wired or wireless manner, to the same detection structure 10.

It is further highlighted that the described solution can be advantageously applied for monitoring any mechanical coupling device, for example for any type of screw 2, regardless of the type and dimensions, thereby sensorizing the same mechanical coupling device.

## Claims

1. A mechanical coupling device (2), comprising a microelectromechanical sensor (1), externally coupled to a surface portion of said mechanical coupling device (2) and including in an integrated manner:
a detection structure (10), of MEMS type, made in a die (11) of semiconductor material, externally coupled to the surface portion of said mechanical coupling device (2) to detect deformations thereof and generate a corresponding detection signal (Sᵣ),
wherein said detection signal (Sᵣ) is correlated to physical quantities associated with said deformations and indicative of operating conditions of the mechanical coupling device (2).

2. The device according to claim 1, of the screw or bolt type; wherein said detection signal (Sᵣ) is designed to be correlated both to a tightening torque of said screw or bolt, during a step of applying said tightening torque; and to a load strength on a stem portion (2b) of said screw or bolt, in the absence of said tightening torque.

3. The device according to claim 2, wherein said microelectromechanical sensor (1) is externally coupled to said screw or bolt, at a head portion (2a), on a front face of said head portion (2a) opposite a rear face coupled to said stem portion (2b).

4. The device according to claim 3, wherein said microelectromechanical sensor (1) is configured to be bonded to said head portion (2a) of said screw or bolt.

5. The device according to any one of the preceding claims, wherein said microelectromechanical sensor (1) further comprises, in an integrated manner, an electronic circuit (12) operatively coupled to the detection structure (10) and configured to receive and process said detection signal (Sᵣ) to generate an output signal (Sₒᵤₜ); wherein said electronic circuit (12) comprises a driving stage (12a) configured to provide driving signals (S_{d}) for the detection structure (10) and a reading stage (12b) configured to generate said output signal (Sₒᵤₜ) as a function of said detection signal (Sᵣ).

6. The device according to claim 5, wherein said microelectromechanical sensor (1) comprises a temperature transducer (40) integrated into the detection structure (10), configured to provide a temperature indication; wherein said reading stage (12b) is configured to compensate, in said output signal (Sₒᵤₜ), a portion that is not related to the physical quantity to be measured and is due to thermal deformation.

7. The device according to claim 5 or 6, wherein said reading stage (12b) is configured to store preliminary characterization information for correlating said output signal (Sₒᵤₜ) to said physical quantities.

8. The device according to any one of claims 5-7, wherein said electronic circuit (12) is configured to autonomously perform processing algorithms for monitoring the mechanical coupling device (2), aimed at predictive diagnostics and/or prognostics based on time evolution of the detection signal (Sᵣ) and/or the output signal (Sₒᵤₜ).

9. The device according to any of the preceding claims, wherein coupling of the microelectromechanical sensor (1) to the mechanical coupling device (2) does not involve any invasive impact or structural modification to the mechanical coupling device (2).

10. The device according to any of the preceding claims, wherein said detection structure (10) comprises a flexural MEMS resonator and is configured to detect deformations in the deformation range ε: 10⁻⁵ - 10⁻¹⁰.

11. The device according to any of the preceding claims, wherein the coupling of the microelectromechanical sensor (1) to the mechanical coupling device (2) is entirely made on the outside of the mechanical coupling device (2).

12. The device according to any of the preceding claims, wherein said microelectromechanical sensor (1) comprises a package (14) which internally encloses the detection structure (10) and an electronic circuit (12), operatively coupled to the detection structure (10); said package (14) being externally coupled to said surface portion of the mechanical coupling device (2).
